(19) Europäisches Patentamt

European Patent Office

Office européen des brevets

(11) **EP 1 418 541 A2**

(12) **EUROPEAN PATENT APPLICATION**

(43) Date of publication:
**12.05.2004 Bulletin 2004/20**

(51) Int Cl.7: **G06N 3/04**

(21) Application number: **03256160.7**

(22) Date of filing: **30.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.09.2002 US 261264**

(71) Applicant: **UNITED TECHNOLOGIES
CORPORATION
Hartford, Connecticut 06101 (US)**

(72) Inventors:
• Depold, Hans R.
  **Bolton Connecticut 06043 (US)**
• Sirag, David J. Jr
  **Ellington Connecticut 06029 (US)**

(74) Representative: **Power, Philippa Louise
Frank B. Dehn & Co.,
179 Queen Victoria Street
London EC4V 4EL (GB)**

(54) **Physics based neural network trend detector**

(57) A physics based neural network (PBNN) for detecting trends in a series of data inputs comprising a neural filter comprising a plurality of nodes for receiving the series of data inputs and outputting a plurality of averaged outputs, at least one standard deviation node for receiving one of the plurality of averaged outputs and the series of data inputs to produce at least one standard deviation output, wherein at least one of the average outputs is a delayed average output and at least one of the standard deviation outputs is a delayed standard deviation output, and a neural detector comprising a plurality of neural detector nodes receiving the plurality of averaged outputs and the delayed average output and outputting a neural detector output, a neural level change node receiving the plurality of averaged outputs and outputting a neural level change estimate output, a neural confidence node receiving a counter input, the delayed standard deviation output, and the neural level change estimate output and outputting a neural assessment output, and a heuristic detector comprising a plurality of detector nodes receiving the averaged inputs, the delayed average input, the series of data inputs, and the delayed standard deviation output and outputting a confidence level output, wherein the neural assessment output and the confidence level output are combined to determine an event in the series of data inputs.

FIG. 1

**Description**

BACKGROUND OF THE INVENTION

(1) Field of the Invention

The present invention relates to a Physics Based Neural Network (PBNN) configured to detect trends and events in a stream of incoming data. More specifically, the present invention relates to a PBNN for detecting significant changes in a data stream comprised of noise whereby the detection is unaffected by changes in the data stream baseline.

(2) Description of Related Art

A neural network is a multilayered, hierarchical arrangement of identical processing elements, also referred to as neurons. Each neuron can have one or more inputs but only one output. Each neuron input is weighted by a coefficient. The output of a neuron is typically a function of the sum of its weighted inputs and a bias value. This function, also referred to as an activation function or sometimes a transfer function, is often a sigmoid function. That is, the activation function may be S-shaped, monotonically increasing and asymptotically approaching fixed values as its input (s) respectively approaches positive or negative infinity. The sigmoid function and the individual neural weight and bias values determine the response of the neuron to input signals.

In the hierarchical arrangement of neurons, the output of a neuron in one layer may be distributed as an input to one or more neurons in a next layer. A typical neural network may include an input layer and two (2) distinct layers; namely, an input layer, an intermediate neuron layer, and an output neuron layer. The nodes of the input layer are not neurons. Rather, the nodes of the input layer have only one input and basically provide the input, unprocessed, to the inputs of the next layer.

The use of neural networks often involves two (2) successive steps. First, the neural network is trained on known inputs having known output values (or classifications). As the training inputs are fed to the neural network, the values of the neural weights and biases are adjusted (e.g., a back-propagation technique) such that the output of the neural network of each individual training pattern approaches or matches the known output. In this way the weights and biases converge towards a locally optimal solution or a minimized an error. In practice, the system is not trained to the point where it converges to an optimal solution because that would require all the data. The system would then be "over trained" such that it would be too specialized to the training data and might not be good at classifying inputs which differ, from those in the training set.

Once the neural network is trained, it can then be used to classify unknown inputs in accordance with the weights and biases determined during training. If the neural network can classify the unknown input with confidence, one of the outputs of the neurons in the output layer will be much higher than the others.

To ensure that the weight and bias terms do not diverge, the algorithm uses small steps. Consequently, convergence is slow. Also, the number of neurons in the hidden layer cannot easily be determined a priori. Consequently, multiple time-consuming experiments are often run to determine the optimal number of hidden neurons.

A related alternative to neural networks is Bayesian networks. Bayesian networks use hypotheses as intermediaries between data (e.g., input feature vectors) and predictions (e.g., classifications). The probability of each hypothesis, given the data may be estimated. A prediction is made from the hypotheses using Conditional (posterior) probabilities of the hypotheses to weight the individual predictions of each of the hypotheses. A Bayesian network includes variables and directed edges between the variables, thereby defining a directed acylic graph (or "DAG"). Each variable can assume any of a finite number of mutually exclusive states.

Assuming that the structure of the Bayesian network is known and the variables are observable, only the set of conditional probability tables need be learned. These tables can be estimated directly using statistics from a set of learning examples. If the structure is known but the variables are hidden, Bayesian networks may be trained, as was the case with neural networks. Using prior knowledge can shorten the learning process.

Support vector machines (or "SVMs") are another type of trainable classifier. SVMs are reportedly more accurate at classification than naive Bayesian networks in certain applications, such as text classification. They are also reportedly more accurate than neural networks in certain applications, such as reading handwritten characters. Unfortunately, however, SVMs reportedly take longer to train than naive Bayesian classifiers.

An object to be classified may be represented by a number of features. If, for example, the object to be classified is represented by two features, it may be represented by a point in two dimensional space. Similarly, if the object to be classified is represented by n features, also referred to as a "feature vector", it may be represented by a point in n-dimensional space. The simplest form of an SVM defines a plane in the n-dimensional space (also referred to as a hyperplane) which separates feature vector points associated with objects "in a class" and feature vector points associated with objects "not in the class". A number of classes can be defined by defining a number of hyperplanes. The hyperplane defined by a trained SVM maximizes a distance (also referred to as an Euclidean distance) from it to the closest points "in the class" and "not in the class". Maximum separation reduced overlap and ambiguity. The SVM defined by the hyperplane that maximizes the distances "d" is therefore likely robust to input noise.

Traditional trend detection requires a technician or engineer graphically plot and analyze data to determine if any change has occurred. But it is difficult to see a shift within the data scatter. Smoothing the data makes it easier to see the levels before and after the shift but it loses the granularity of the data during the shift delaying the time of detection.

Applying neural networks to the problem of trend detection has proven difficult. In a best case scenario, engineering judgement is used and data is pre-conditioned before training or applying the neural network. Neural networks can be applied before and after discontinuities but are often unstable for a complete range of data.

What is therefore needed is an apparatus for detecting trends which does not suffer from losses in the granularity of the output and can adapt to changes in baseline input levels.

## SUMMARY OF THE INVENTION

Accordingly, it is an object of the present invention to provide a PBNN for detecting significant changes in a data stream comprised of noise whereby the detection is unaffected by changes in the data stream baseline.

In accordance with the present invention, a physics based neural network (PBNN) for detecting trends in a series of data inputs comprises a neural filter comprising a plurality of nodes for receiving the series of data inputs and outputting a plurality of averaged outputs, at least one standard deviation node for receiving one of the plurality of averaged outputs and the series of data inputs to produce at least one standard deviation output, wherein at least one of the average outputs is a delayed average output and at least one of the standard deviation outputs is a delayed standard deviation output, and a neural detector comprising a plurality of neural detector nodes receiving the plurality of averaged outputs and the delayed average output and outputting a neural detector output, a neural level change node receiving the plurality of averaged outputs and outputting a neural level change estimate output, a neural confidence node receiving a counter input, the delayed standard deviation output, and the neural level change estimate output and outputting a neural assessment output, and a heuristic detector comprising a plurality of detector nodes receiving the averaged inputs, the delayed average input, the series of data inputs, and the delayed standard deviation output and outputting a confidence level output, wherein the neural assessment output and the confidence level output are combined to determine an event in the series of data inputs.

## BRIEF DESCRIPTION OF THE DRAWINGS

FIG. 1 - A diagram of the PBNN of the present invention.
FIG. 2 - A diagram of an embodiment of a neural filter of the present invention.
FIG. 3 - A diagram of an embodiment of a neural detector of the present invention.
FIG. 4 - A diagram of an embodiment of a heuristic detector of the present invention.
FIG. 5a - A diagram of a neural network node known in the art.
FIG. 5b - A diagram of an embodiment of a PBNN node of the present invention configured to eliminate baseline error.

## DETAILED DESCRIPTION OF THE PREFERRED EMBODIMENT(S)

The present invention is drawn to Physics Based Neural Networks (PBNN) for detecting trends in input data. PBNNs, as will be described more fully below, provide efficient computational mechanisms for the identification, representation, and solution of physical systems based on a partial understanding of the physics and without the need for extensive experimental data. Therefore, PBNNs form quasi-neural networks which recognize the fractal nature of real neural networks. As used herein "fractal" relates to the property of PBNNs scale up and down the concepts embedded within them. Scaling down is the process whereby individual neural functions are tailored using domain knowledge to create fully structured but partially understood processes that can be trained. Scaling up is the process whereby whole heuristic or computational processes are configured in a neural network and trained without the need for extensive experimental data.

A PBNN is a network of nodes, each of which consists of a set of inputs, a single output, and a transfer function between them. A single PBNN node is defined by specifying its transfer function and designating the outputs of other PBNN nodes as its input quantities. Processing through the node consists of collecting the input quantities, evaluating the transfer function, and setting the output to the result. The transfer function can consist of a connected collection of other PBNNs (called internal nodes) or any other mathematical relationship defined between the input and output values.

Internal nodes in a PBNN network can be other PBNN networks. Assembling a PBNN network for a given problem is done by decomposing its defined set of mathematical equations into a collection of nodes. Complex functions can then be decomposed of collections of more elementary functions, down to a reasonably low level of definition. Elementary PBNN nodes have been used to represent simple mathematical operations like sums or products, exponentials, and elementary trigonometric functions. Since a PBNN node in one network can consist of a complete network itself, the internal transfer function can become as complex as desired.

One interesting type of elementary PBNN node is the "parameter" node, where the underlying transfer function simply sets a constant output regardless of input. These nodes are used to represent parameters in a computation. They can be, however, designated as adaptive, and thereby tuned to a given problem.

A complete PBNN network is built from a set of PBNN nodes, with the internal connectivity defined by the underlying model. Once the individual nodes are defined and connected as desired, the user then selects which nodes will represent "output" quantities in the overall calculation. Additional nodes are designated as "training" quantities, which are modified as the network is tuned to a given problem. Finally, a set of nodes is designated as "input" nodes, whose values are set externally during each processing run. The collection of PBNN networks, input node set, training node set, and output node set, makes up a complete PBNN.

PBNN networks are run in two stages. The first, training stage, consists of presenting a known set of inputs and outputs to the PBNN network, and adjusting the training nodes to minimize the resulting error. This can be done in a variety of ways including, but not limited to, varieties of the backpropagation algorithm used in traditional neural networks, conjugate gradient methods, genetic algorithms, and the Alopex algorithm.

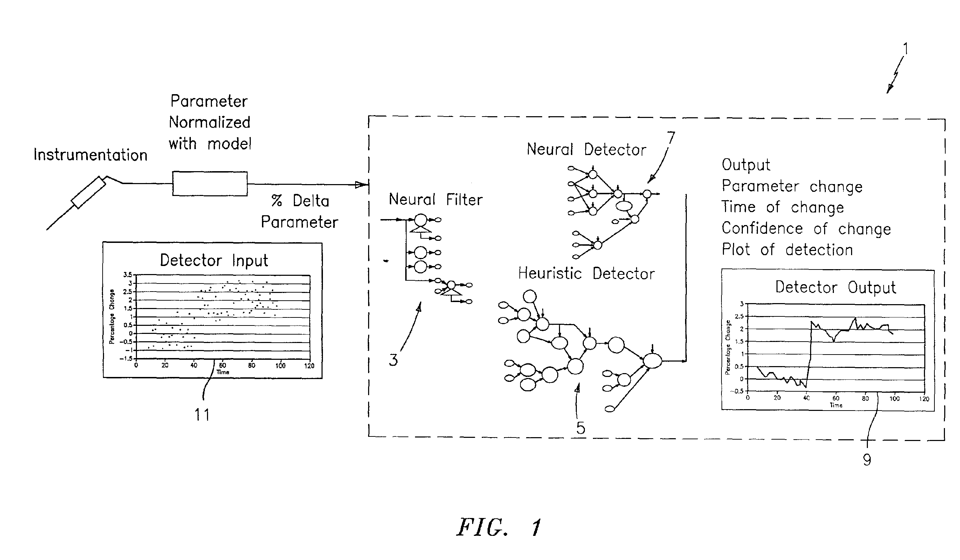

With reference to Fig. 1, there is illustrated a PBNN 1 configured to detect trends in input data 11 by instantiating engineering judgment and embedding automated statistical confidence analysis in a PBNN 1. The PBNN 1 is itself comprised of three PBNNs: neural filter 3, neural detector 7, and heuristic detector 5. Neural filter 3 receives input data 11 and processes it to produce a plurality of outputs. The outputs of neural filter 3 form the inputs to neural detector 7 and heuristic detector 5.

In a preferred embodiment, detector input is 11 is derived from instrumentation located external to PBNN 1 and consists of a series of measured inputs recorded at substantially even time intervals. Preferably, detector input 11 is comprised of percent changes between subsequent measured inputs. The output 9 of PBNN 1 is comprised of a series of data points from which can be derived the time at which an abrupt change occurred, the statistical confidence that the change was real as opposed to a spurious error recorded by the instrumentation, and a plot of the detection.

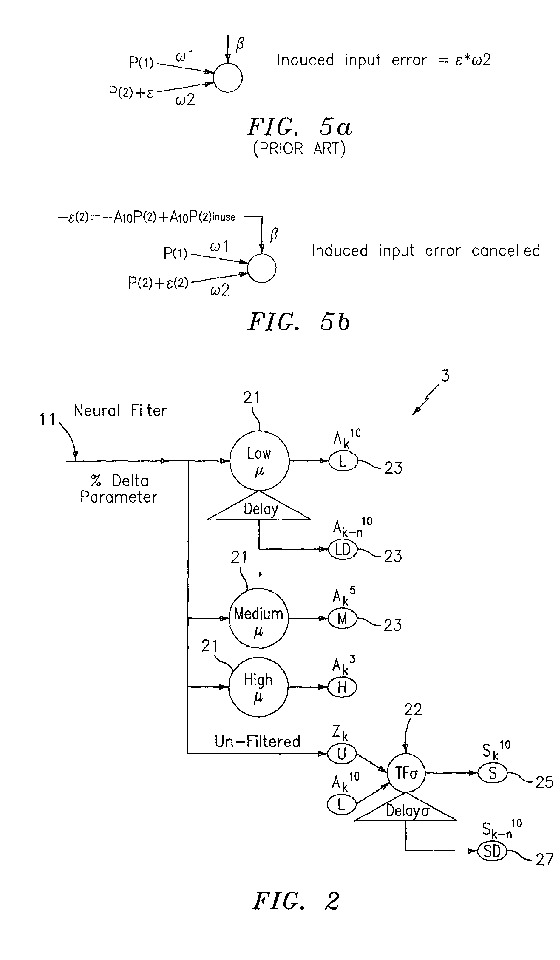

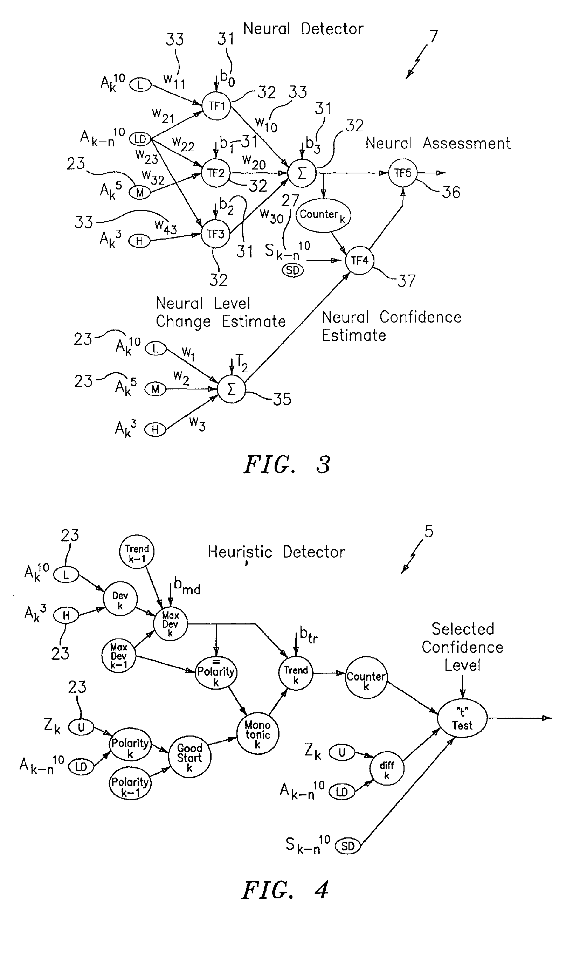

With reference to Fig. 2 there is illustrated in detail a preferred embodiment of neural filter 3. Detector input 11 forms the input to a plurality of filter nodes 21. In the example illustrated, there are three filter nodes 21 comprising a low, medium, and high pass filter formed by averaging ten, five, and three input data points respectively. The number of filters, as well as the number of points averaged by each filter, may be varied in accordance with the nature and volatility of the detector input 11. Each filter node 21 outputs an average value 23 for a predefined number of inputs. Note that low frequency filter node 21 outputs an average value 23 delayed by n inputs. Standard deviation node 22 receives as input the ten point average value 23 outputted by low frequency filter node 21 as well as the most recent unfiltered input data point. From these inputs the transfer function of standard deviation node 22 outputs a standard deviation 25 of the unfiltered input data point from the low frequency filter node 21 average as well as a delayed standard deviation 27.

As a result, the four filter nodes 21 allow the granularity of the detector input 11 analysis to vary from a ten point (or other low frequency filter level) average before an event to individual point analysis during an event and back seamlessly to a ten point average (or other low frequency filter level) after the event. The delayed average value 23 outputted by the low frequency filter provides an additional delayed output that can be used as a baseline level up to the point at which the detector is designed to detect.

The average values 23, standard deviation 25, and delayed standard deviation 27, form the inputs to neural detector 7 and heuristic detector 5. With reference to Fig. 3, there is illustrated a preferred embodiment of neural detector 7. The inputs are multiplied by configurable weights 33 prior to being inputted into nodes 32. Each node 32 has a predefined transfer function and a threshold value 31. If the result of a node's 32 transfer function exceeds the predefined threshold value, the output, weighted by a weight 33, is passed to a node 32 to perform a summation. If the summation exceeds the summation node's 32 threshold value 31, the output is passed to neural assessment node 36 and to a counter for keeping track of the number of data points that have been entered since the last detected event and outputting the result to neural confidence estimate 37. In addition, neural confidence estimate node 37 receives as input delayed standard deviation 27 and the output of neural level change estimate node 35. Neural level change estimate node 35 receives as input average values 23, sums them, and outputs whether or not the sum exceeds a predefined threshold value $T_2$. Neural confidence estimate node 37 applies a transfer function to its inputs to produce an output indicative of the statistical confidence that an event has occurred similar to a statistical T-test and directs the output to neural assessment node 36. The result of the operation of neural detector 7 is an output from neural assessment node 36 indicative of whether or not an event has occurred.

In this manner neural detector 7 uses the average values 23 from the filters to detect the time the event occurred, estimates the magnitude of the change in the parameter's level, and creates a filter that is trained to use the magnitude of the change and the number of points from when the change occurred to decide if the change exceeds thresholds needed to generate an advisory or an alert. Neural detector 7 is trained prior to operation on sample data to detect real trend changes and to be unresponsive to random noise and random walks within the noise.

With reference to Fig. 4, there is illustrated a preferred embodiment of the heuristic detector 5 of the present invention. Heuristic detector 5 is comprised of a plurality of nodes whose outputs taken together determine (1) the levels of the input data and the standard deviation of the input data prior to start of a trend, (2) the time or point of the trend start, (3) whether or not the PBNN 1 has achieved a good start of operation, i.e. the new values do not cross the moving average, (4) whether the input data continues to diverge or begins to converge with the moving average, (5) whether the data shows a monotonically increasing or decreasing trend, (6) whether the trend is ending, (7) the measured level change, (8) the statistical confidence level of the change based on the level change, and (9) the number of points in the new trend population.

In a preferred embodiment, heuristic detector 5 receives as inputs average values 23, trend information, and deviation data, computes data polarity, identifies trends and performs an actual T-test. Note that the output node of heuristic detector 5 has a predetermined threshold level equal to the desired confidence level.

With further reference to Fig. 1, it can be seen that the output of neural detector 7 is combined with the output of heuristic detector 5. As a result, heuristic detector 5, configured to perform engineering detection processes (heuristics), is combined with independent trained neural detector 7 PBNN acting as a second opinion. Both types of detectors are required to fire before an alert is issued. The confidence level required for the detection is selectable. The output consists of the parameter change, the time of change, the confidence level of the change, and a plot that has filtered the data before and after the change.

While the foregoing describes in detail the preferred configurations of neural filter 3, neural detector 7, and heuristic detector 5 comprising PBNN 1, there is herein described preferred embodiment for some of the plurality of different node types utilized in PBNN 1.

This PBNN 1 of the present invention can be configured to filter or smooth to any degree of granularity and can change from one granularity to another within one data point with no loss of information. All relevant past information for a given parameter is contained with one memory record which is gradually forgotten while learning new data. The order can be changed to provide memory, trends, filtered, and lagged parameter averages/variance or any other statistical property.

As noted above, engineering judgment is typically used and input data is pre-conditioned before training or applying standard neural networks to process streams of input data. The neural network is applied before and after discontinuities, arising from an event, but is often unstable for a complete range of data.

In contrast, the PBNN 1 of the present invention is capable of conditioning or adapting the input data to rapid changes by modifying the granularity of the neural network automatically using an array of filters that span the range of desired neural response.

The input and outputs of a node capable of such modifications is modeled as follows:

$$Z(i) \rightarrow \text{Node} \rightarrow \mu^K_{(New)}(i)$$

Where i is the current input, k is the number of points to be averaged, and $\mu$ represents an average.

Such a node provides transfer function for a first order function defined as follows:

$$\mu^K_{(New)}(i) = \phi * \mu^K_{(Old)}(i-1) + (1-\phi) * Z(i)$$

This function provides a variable "$\phi$" to change the filter properties and to provide a continuous or discontinuous range of moving averages.

Higher (e.g. n) order functions may be realized as follows:

$$V^K_{(New)}(i) = \phi * (V^K_{(Old)}(i-1))^2 + (1-\phi) * (Z(i) - \mu^K_{(New)}(i)2$$

This provides a variable "φ" to change the filter properties and to provide a contiguous or discontinuous range of higher order statistical (e.g. variances) or other function averages. These averages may be lagged (e.g. by 10 points) for filtering:

$$\mu^K_{(New)}(i-10)$$

They may immediately be reinitialized:

$$\mu^K_{(New)}(i) = \phi * \mu^K_{(Inuse)}(i-1) + (1- \phi) * Z(i)$$

where inuse signifies a discontinuous independently determined level change.

In addition to discontinuities in a stream of input data that might signal a significant event or failure, discontinuities may arise from changes in the instrumentation making input measurements. The present invention is further drawn to a method and apparatus for correcting neural computations for errors that occur when there is a change relative to a baseline. Baseline errors occur when instrumentation is changed or recalibrated, when the power system characteristics change with time, and when a model used to normalize training data has changed.

As noted above, higher fidelity data reduction systems tend to use reference models from which a parameter delta is computed relative to its model. When instrumentation is changed or recalibrated, when a power system's performance level changes, or when the referenced model is changed; the parameter delta value changes in level by a finite amount "ε." With reference to Fig. 5a, there is illustrated a node receiving as inputs baseline parameter β, input weights w1 and w2, and two input, P(1) and P(2) to which has been added error term ε. The resulting induced input error equals ε * w2. This change introduces an error in the neural network solution that cannot be computed because there is no access to the individual neurons in a typical neural network. One method of avoiding this problem in typical neural networks involves considerably increasing the size of the neural network and subsequently training it with a full range of potential level biases. Unless the effect of biases is removed, a classification error will occur and will likely be miss-attributed to some unknown nonlinear property of the power system.

Since the architecture of a PBNN 1 of the present invention is well defined, the PBNN can calculate and remove the error so that classification errors do not occur. The error is removed in the PBNN 1 by canceling it with a bias at the input nodes. It is a simple procedure for a PBNN 1 because there is access to every part of every neuron. With reference to Fig. 5b, there is illustrated a node receiving as inputs baseline parameter β, input weights w1 and w2, and two inputs, P(1) and P(2) to which has been added error term ε(2). The training baseline parameter level β is given the name "inuse" because the baseline shift is a level bias that can be independent of the changes to the parameters caused by the laws of physics. The "inuse" value can be the original baseline from the training data, or in the case of trend detection it is a time delayed average value with the delay sufficiently long to allow trend detection before the delayed signal is affected by the trend shift. As a result, the induced input error is cancelled.

It is apparent that there has been provided in accordance with the present invention a PBNN, and method of operating the same, for detecting significant changes in a data stream comprised of noise whereby the detection is unaffected by changes in the data stream baseline.

While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

**Claims**

**1.** A physics based neural network (PBNN) for detecting trends in a series of data inputs comprising:

a neural filter comprising:

a plurality of nodes for receiving said series of data inputs and outputting a plurality of averaged outputs;
at least one standard deviation node for receiving one of said plurality of averaged outputs and said series of data inputs to produce at least one standard deviation output;
wherein at least one of said average outputs is a delayed average output and at least one of said standard deviation outputs is a delayed standard deviation output; and

a neural detector comprising:

a plurality of neural detector nodes receiving said plurality of averaged outputs and said delayed average output and outputting a neural detector output;
a neural level change node receiving said plurality of averaged outputs and outputting a neural level change estimate output;
a neural confidence node receiving a counter input, said delayed standard deviation output, and said neural level change estimate output and outputting a neural assessment output; and

a heuristic detector comprising:

a plurality of detector nodes receiving said averaged inputs, said delayed average input, said series of data inputs, and said delayed standard deviation output and outputting a confidence level output;

wherein said neural assessment output and said confidence level output are combined to determine an event in said series of data inputs.

2. The PBNN of claim 1 wherein said averaged outputs comprise a low frequency filter, a high frequency filter, and a medium frequency filter.

3. The PBNN of claim 1 wherein said heuristic detector further comprises a predefined confidence level.

4. The PBNN of claim 1 wherein at least one of said plurality of nodes comprises a transfer function providing a continuous range of moving averages.

5. The PBNN of claim 1 wherein at least one of said plurality of nodes comprises a transfer function providing a discontinuous range of moving averages.

6. The PBNN of claim 1 wherein at least one of said plurality of nodes comprises a transfer function providing a continuous range of higher order statistical averages.

7. The PBNN of claim 1 wherein at least one of said plurality of nodes comprises a transfer function providing a continuous range of higher order function averages.

8. The PBNN of claim 1 wherein at least one of said plurality of nodes comprises a transfer function providing a discontinuous range of higher order statistical averages.

9. The PBNN of claim 1 wherein at least one of said plurality of nodes comprises a transfer function providing a discontinuous range of higher order function averages.

10. The PBNN of claim 1 wherein at least one of said plurality of nodes comprises means for receiving a baseline parameter, a first input weight and a second input weight and at least one of said series of data inputs to which is added an error term.

11. The PBNN of claim 10 wherein said at least one of said plurality of nodes comprises a bias capable of canceling said error term.

*FIG. 1*

P(1) — ω1, P(2)+ε — ω2, β

Induced input error = $\varepsilon * \omega 2$

## FIG. 5a
(PRIOR ART)

$-\varepsilon(2) = -A_{10}P(2) + A_{10}P(2)_{inuse}$, β

P(1) — ω1, P(2)+ε(2) — ω2

Induced input error cancelled

## FIG. 5b

Neural Filter

11

% Delta Parameter

21 — Low μ → $A_k^{10}$ (L) — 23

Delay → $A_{k-n}^{10}$ (LD) — 23

21 — Medium μ → $A_k^5$ (M) — 23

21 — High μ → $A_k^3$ (H)

Un-Filtered → $Z_k$ (U)

22

$A_k^{10}$ (L) → TFσ → $S_k^{10}$ (S) — 25

Delayσ → $S_{k-n}^{10}$ (SD) — 27

## FIG. 2

FIG. 3

FIG. 4